# EUROPEAN PATENT APPLICATION

(11) **EP 1 970 216 A2**
(43) Date of publication of application: **17.09.2008**
(21) Application number: 08151240.2
(22) Date of filing: 08.02.2008
(51) Int. Cl.: B44C 5/04

(54) **Wooden panel for making internal floors in buildings**

(30) Priority: 09.02.2007 IT TO20070103
(71) Applicant: Skema S.r.l., Ponte di Piave (IT)
(72) Inventor: Barabas, Domenico, 31052 Maserada sul Piave (IT)
(74) Representative: Jorio, Paolo

(57) **Abstract**

There is described a wooden panel (1) for making internal floors in buildings, comprising a central supporting sheet (4), and a covering sheet (5) stably fixed on a face (6) of the central supporting sheet (4) so as to define the visible surface of the panel (1); the central supporting plate (4) being integrally made of solid wood, while the covering sheet (5) comprising a resin-impregnated cellulosic supporting sheet; on the external surface of the cellulosic supporting sheet (8) there is printed a photoreproduction of a wooden surface and/or a decoration made on wood.

## Description

The present invention relates to a wooden panel for making floors.

Specifically, the present invention relates to a wooden panel to be essentially used for flooring internal surfaces in buildings; to which explicit reference will be made in the following description without therefore loosing in generality.

It is known that some panels currently used for making floors inside buildings are constructed so as to have a series of sheets of different materials and thicknesses, which are reciprocally overlaid so as to form a wafer, i.e. a single, stratified body.

Specifically, the sheets which compose the flooring panel structure are stably fixed together to provide specific stability and/or compactness and/or floor decoration functions according to their arrangement in the aforesaid structure.

More in detail, some last-generation panels are made so as to comprise: a central supporting sheet, a decorative surface sheet stably fixed onto the upper face of the central supporting sheet, on the side opposite to the leaning face of the panel on the ground, and a counterbalancing sheet fixed to the lower face of the central supporting sheet, on the side opposite to the decorative surface sheet.

In this case, the counterbalancing sheet is made, for example, by means of an artificial material, while the central supporting sheet displays a layer of composite material typically consisting of a mixture of wood powders and thermosetting resins, commonly known as MDF (Medium Density Fiberboard) or as HDF (High Density Fiberboard), or by a wood chips or wood fibers-based and resin paste commonly named "chipboard".

On the other hand, as the decorative surface sheet is concerned, it is made by means of a thin cellulosic-support sheet, on the external surface of which an image, i.e. a photoreproduction of a wooden surface, may be printed. In this case, the surface sheet typically consists of at least one sheet of printed paper depicting a wooden surface and/or a decoration made on wood, which is impregnated with a melamine resin and fixed onto the upper face of the supporting sheet by means of a given hot pressing process.

Finally, a transparent protective film, commonly named overlay, comprising a thermosetting melamine and corundum-based resin serving the function of protecting the decoration from wear is applied onto the decorative sheet.

In virtue of the low cost and the high degree of resistance to surface wear, the panels of the aforedescribed type have recently become widespread in the internal floor field. Indeed, the use of the central supporting sheet of composite material allows to considerably cut the manufacturing costs of the panels, while the use of protective film applied onto the decorated melamine resin-impregnated paper sheets confers a high degree of protection to surface wear of the panel while the same is stepped on.

Although the above-described panels are particularly advantageous from the economic point of view and in terms of durability, they have the drawback of being particularly heavy; in detail, the supporting sheets of composite material such as MDF or HDF display an extremely high specific weight and thus contribute to increase the overall weight of each panel thus making it unsuitable for making floors intended to be leaned on load-bearing structures capable of withstanding loads of limited weight.

Furthermore, in terms of stability, the panels made with supporting sheets of composite material are particularly subject to the climatic/environmental condition changes, which occur in the environment in which the panel is arranged.

It is thus the object of the present invention to make a wooden panel for floors which is capable of maintaining the properties and the advantages offered by stratified panels of the known types and, at the same time, is lighter and stabler than the known panels described above.

According to the present invention, a wooden floor panel as described in claim 1 and preferably, but not necessarily, in any one of the dependent claims, is made.

The present invention will now be described with reference to the accompanying drawings, which disclose a non-limitative embodiment thereof, in which:
- figure 1 is a partial section perspective view of a wooden floor panel made according to the principles of the present invention;
- figure 2 is a perspective view of a different embodiment of the floor panel shown in figure 1;
- figure 3 is a top view of the structure of a central supporting sheet of the wooden panel shown in figure 1;
- figure 4 is a top view of the structure of a central supporting sheet of the wooden panel shown in figure 1 according to a different embodiment; and
- figure 5 is a top view of the structure of a central supporting sheet of the wooden panel shown in figure 1 according to a further possible embodiment.

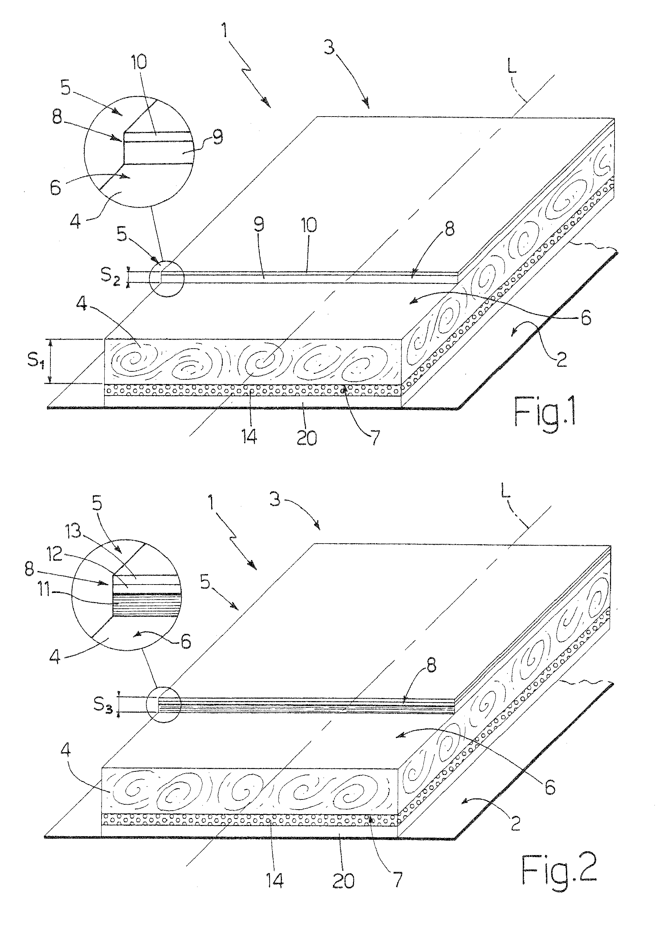

With reference to figure 1, numeral 1 indicates as a whole a wooden panel adapted to be arranged on a leaning surface 2 to be laterally coupled, by means of appropriate fitting systems (not shown), to other wooden panels having the same structure, so as to make an internal floor 3 of a building.

The wooden panel 1 essentially comprises at least one central supporting sheet 4 which, unlike the currently known floor panels, instead of being made of composite resin-based material, such as MDF or HDF, is integrally made of solid wood; and a cellulosic-support covering sheet 5, which is fixed onto the upper face 6 of the central supporting sheet 4 opposite to the lower leaning face 7 of the wooden panel 1 on the leaning surface 2.

In the example shown in figure 1, the panel 1 comprises a central supporting sheet 4 comprising a compact monolithic plank of natural solid wood, which is essentially rectangular-shaped and which has a predetermined thickness S₁, preferably between 6 and 15 millimeters.

It is worth specifying that the term "natural wood plank" means a compact monolithic portion of a semifinished product made of solid wood, i.e. in solid wood obtainable, for example, by means of cutting and/or flaking operations of wooden logs. It is further worth specifying that the compact solid wood structure is evidently different from that of composite materials, such as MDF or HDF because in addition of being compact it is free therein from any type of wood powders and/or thermosetting resins.

As regards the covering sheet 5, in the example shown in figure 1, it comprises a melamine resin-impregnated paper sheet 8 having a predetermined thickness S₂ preferably between 0.10 and 0.20 millimeters, which is fixed onto the upper face 6 of the central supporting sheet 4 by means of a hot pressing process of known type, and defines the external face, i.e. the visible face of the panel 1.

In the example shown in figure 1, the sheet 8 comprises two overlaid layers, the first of which is defined by a decorative melamine resin-impregnated paper film 9, which is fixed onto the upper face 6 of the central supporting sheet 4; while the second layer comprises a protective film 10 preferably comprising of a thermosetting melamine and/or corundum-based resin or any other similar resin, which is fixed over the decorative film 9 and which has the function of protecting the decoration from wear.

On the external surface of the covering sheet 5, i.e. on the decorated sheet 9, there is printed a photoreproduction (not shown) of a wooden surface and/or a decoration made on a wooden surface, in which there are visible, for example, the grains and the other aesthetic elements which typically characterize a wooden floor.

It is worth specifying that the combination of the features deriving from the coupling between the solid natural wooden plank and the melamine resin-impregnated paper covering sheet 8 is extremely advantageous because, on one hand, it allows to considerably decrease the total weight of the panel 1 and, on the other, it allows to obtain a high wear resistance while stepping on the surface of the panel 1.

Considering what above described, it is worth adding that such a decrease of weight is obtained in virtue of the fact that the panel 1 is made so as to have a stratified structure entirely free from sheets of composite material, such as for example MDF or HDF.

Preferably, but not necessarily, the panel 1 further comprises a counterbalancing sheet 20, which is stably fixed onto the lower face 7 of the central supporting sheet 4 and has the function of counterbalancing and stabilizing the panel 1. The counterbalancing sheet 20 may be preferably, but not necessarily, made of wood.

According to a possible embodiment shown in figure 2, the sheet 8 of the covering sheet 5 of the panel 1 consists of a cellulosic-support laminate made according to HPL (High Pressure Laminate) technology and having a thickness S₃, which is preferably greater than S₂ and is between approximately 0.40 and 1.50 millimeters.

In this case, the HPL sheet 8 essentially comprises three overlaid, reciprocally glued layers, the first of which is defined by a thick layer 11 consisting of a wafer of overlaid and melamine resin-impregnated paper films; the second layer 12 comprises a thin decorative melamine resin-impregnated paper film, which is fixed onto the external face of the wafer and depicts a photoreproduction of a wooden surface, while the third layer 13 comprises a thin protective film, preferably consisting of a thermosetting melamine- and/or corundum-based resin, which is arranged over the decorative film and has the function of protecting the decoration itself from wear. The structure of the HPL is known and will thus not further described.

In order to increase the soundabsorbing properties of the floor, the panel 1 may further comprise at least one soundabsorbing plate 14, which is made by means of one or more cork sheets. Specifically, in the example shown in figures 1 and 2, the cork soundabsorbing plate 14 is interposed between the central supporting sheet 4 and the counterbalancing sheet 20. It is however apparent that the cork soundabsorbing plate 14 could have a different arrangement than that shown above, i.e. could be interposed between the supporting sheet 4 and the covering sheet 5.

It is worth specifying that the use of a cork sheet in panel 1 is extremely advantageous because, in addition of being very light and thus not affecting the total weight of the panel 1, it displays a high degree of acoustic absorption in virtue of its internal porosity.

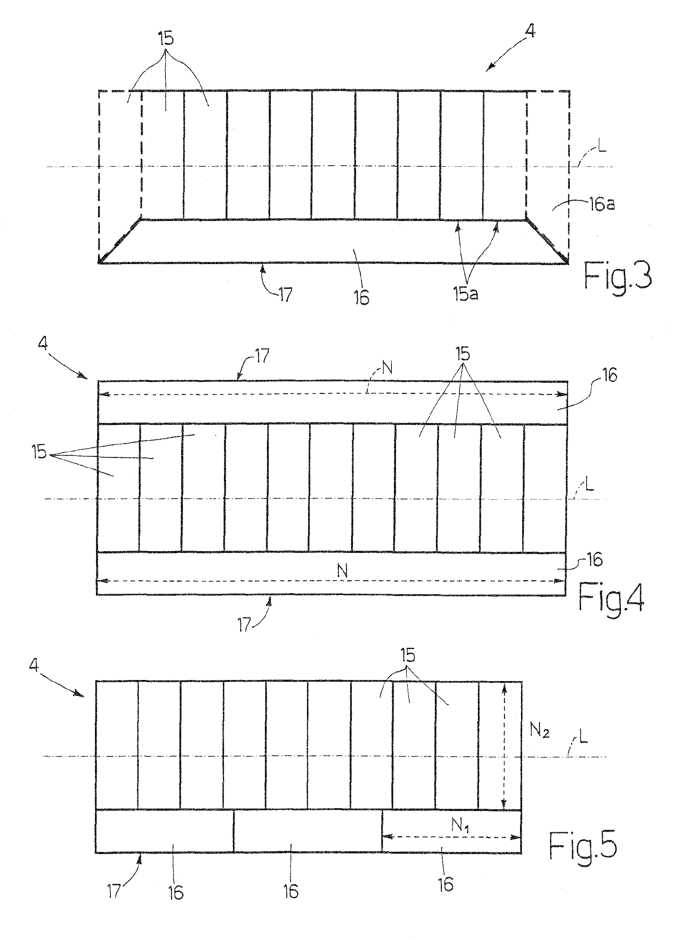

According to an embodiment shown in figure 3, the central supporting sheet 4, instead of being made of a single body of solid wood, is split into a series of transversal solid wood strips 15, which are arranged with corresponding axes orthogonal to the longitudinal axis L of the panel 1 in reciprocally parallel positions side-by-side so as to define an essentially rectangular-shaped portion; and at least one rectangular-shaped, longitudinal solid wood strip 16, which extends parallelly to axis L so as to be adjacent to the shorter sides of the strips of the traversal strips 15 themselves, so as to define a longer side edge 17 of panel 1.

In detail, in the example shown in figure 3, the transversal strips 15 are arranged in sequence side-by-side so that the corresponding shorter sides are reciprocally aligned, while the longitudinal strip 16 is abuttingly arranged with a longer side 16a thereof on the shorter sides 15a of the transversal strips 15 to cover the same.

In the example shown in figure 3, the longitudinal strip 16 has a length essentially equal to that of the panel 1 and displays the external side thereof shaped so as to be coupled by means of a fitting system of the known type with the external side of another panel 1.

It is worth specifying that the transversal strips 15 may be dimensioned to have reciprocally different lengths measured along the longitudinal axis L so as to advantageously allow a reduction of waste material during the manufacture of the panel 1.

According to a different embodiment shown in figure 4, the central supporting sheet 4 comprises a pair of longitudinal strips 16 of length N, which are arranged on opposite sides of the transversal strips 15 so as to define the two longer side edges of the panel 1. Specifically, the two longitudinal strips 16 are abuttingly arranged on the shorter sides 15a of the transversal strips 15 on opposite sides with respect to the middle plane of the panel 1.

According to a different embodiment shown in figure 5, the central supporting sheet 4 comprises a series of longitudinal strips 16, which are arranged reciprocally in sequence so as to define at least one of the two longer side edges of the panel 1.

In this case, the longitudinal strips 16 have a length N₁ which is shorter than the length N of the panel 1 and preferably, but not necessarily, equal to the length N₂ of the transversal strips 15 and are aligned reciprocally in sequence so as to be abuttingly arranged on the aligned shorter sides of the transversal strips 15 themselves.

Regarding what above described, it is worth specifying that the use of the longitudinal strips 16 for covering the shorter sides of the transversal strips 15 of the central supporting sheet 4 is extremely advantageous because it increases the compactness of the side edge(s) of the panel 1 with respect to the known panels made of transversal strips only. Indeed, the longitudinal strip abuttingly arranged on the shorter sides of the traversal strips allows to have a continuous fitting side profile free from weakening lines. It is thus apparent that the construction of the longer side edge of the strip, on which the fitting profile may be obtained, through one or more longitudinal strips increases compactness and rigidity of the fitting system of the panel itself.

In addition to the above, it is worth specifying that for the purpose of further increasing the compactness of the side edge(s) of the panel 1, each of the longitudinal strips 16 and the transversal strip(s) 15, which form the external peripheral edge of the panel 1, may be shaped so as to display the corresponding ends inclined by approximately 45 degrees with respect to the longitudinal axis L (broken line in figure 3).

Specifically, in the example shown in figure 3, the transversal strips 15 and the longitudinal strips 16 of the panel are shaped so as to display the corresponding ends butted with a bevel of approximately 45° with respect to the longitudinal axis L of the panel.

The above-described panel displays the following advantages: firstly, the use of the central supporting sheet 4 of solid wood instead of composite material, such as MDF or HDF determines a considerable total weight reduction of the panel 1, making it thus suitable for manufacturing floors adapted to lean on structures capable of withstanding loads of limited weight. It is worth specifying that such reduction is obtained in virtue of the fact that the specific weight of the wood is considerably lower than the specific weight of the currently used composite material. Specifically, the wood displays a specific weight approximately between 400 and 500 kg/m³, while the composite materials such as MDF or HDF display a higher specific weight of approximately 850 kg/m³.

Additionally, the use of the solid wood plank and of the cork soundabsorbing plate 14 in the panel 1 determines an absorption of the sound intensity due to the noise, generated by stepping on the floor, which is particularly high in the "medium-to-high" sound frequency range.

In this case, laboratory tests have demonstrated that the pattern of the acoustic noise absorption spectrum of the panel 1 is essentially constant in the medium-to-low frequency range approximately between 16 and 400 Hz, and increases in the medium-to-high frequency range approximately between 400 and 16000 Hz. Therefore, the panel 1 in virtue of the solid wood body and the cork body is capable of attenuating the noise, caused by stepping, which is higher in the medium-to-height frequency spectrum, thus limiting the diffusion of particularly annoying noises, such as for example the noise generated when stepping, following each contact between the hard heel of a shoe and the surface of the panel.

The use of the solid wood plank and of the cork sheet reduces the percentage of artificial substances, i.e. of melamine resins and composite materials which are present in the stratified panel, thus making it more "eco-friendly" and thus more attractive in the market in relation to the requests of users particularly sensitive and attentive to the natural composition of wooden floors.

Finally, it is worth specifying that the use of the central supporting sheet made of wood confers a greater stability to the panel structure in relation to the climatic/environmental conditions changing, also when the surface dimensions of the same are larger, in the order of approximately 1 m², the latter condition not being obtainable with panels made of central layers of MDF or HDF.

It is finally apparent that changes and variations can be made to the panel described and illustrated herein, without departing from the scope of the present invention defined by the appended claims.

## Claims

1. A wooden panel (1) for making floors **characterized in that** it comprises:
a least one supporting sheet (4) and a covering sheet (5) stably fixed onto the upper face (6) of said supporting sheet (4) so as to define a visible surface of the panel (1);
said supporting sheet (4) comprising a solid wood body having a given thickness (S₁);
said covering sheet (5) comprising at least one cellulosic-support sheet (8), which is impregnated with one or more resins; a photoreproduction of a surface and/or of a decoration made on a wooden surface being printed on the external face of said cellulosic-support sheet (8).

2. A panel according to claim 1, wherein said supporting sheet (4) comprises a compact, monolithic, solid wood body.

3. A panel according to claims 1 or 2, wherein said sheet (8) comprises at least two overlaid layers; said first layer comprising a decorative melamine resin-impregnated paper film (9), which is fixed onto the upper face (6) of said supporting sheet (4); while a second layer comprising a protective film (10) comprising, in turn, a thermosetting resin.

4. A panel according to claims 1 or 2, wherein said sheet (8) comprises a laminated cellulosic-support layer made according to HPL technology having a given thickness (S₃) .

5. A panel according to claim 4, wherein said laminated sheet (8) comprises at least three overlaid, reciprocally glued layers, of which one layer (11) comprises a melamine resin-impregnated paper wafer; a second layer (12) comprising a thin, decorative film, which is fixed onto the external face of said wafer and depicts a photoreproduction of a wooden surface; a third layer (13) comprising a thin protective film comprising of a thermosetting resin, which is arranged over said decorative film.

6. A panel according to any one of the preceding claims, comprising at least one soundabsorbing plate (14) comprising at last one cork sheet.

7. A panel according to claim 6, wherein said soundabsorbing plate (14) comprises at least one cork sheet interposed between said central supporting sheet (4) and said covering sheet (5).

8. A panel according to any one of the preceding claims, wherein said central supporting sheet (4) extends along a longitudinal axis (L) of the panel, and is split into a series of transversal solid wood strips (15) essentially rectangular-shaped, which are arranged orthogonal to the longitudinal axis (L) so as to define an essentially rectangular, elongated portion; and at least one longitudinal solid wood strip (16), which extends parallel to the longitudinal axis (L) and is abuttingly arranged on a longer side of said rectangular portion so as to define a longer external side edge (17) of the panel (1) .

9. A panel according to claim 8, wherein said longitudinal strip (16) has a length (N) essentially equal to the length of the panel (1) and displays the external side thereof shaped so as to be coupled, by means of a fitting system, with the external side of another panel (1) .

10. A panel according to claim 8, comprising a plurality of longitudinal strips (16), which are arranged reciprocally in sequence and parallel to said longitudinal axis (L), and are abuttingly arranged on a longer side of said rectangular portion formed by the traversal strips (15), so as to define a longer side edge (17) of the panel (1).

11. A panel according to claim 10, wherein each of said longitudinal strips (16) has a length (N₁) essentially equal to the length (N₂) of the transversal strips (15); said longitudinal strips (16) being aligned reciprocally in sequence so as to be abuttingly arranged on the aligned shorter sides of said transversal strips (15).

12. A panel according to claim 11, wherein the longitudinal strips (16) and the transversal strips (15) which form the external peripheral edge of said panel (1) are shaped so as to display corresponding ends butted with a bevel of approximately 45° with respect to said longitudinal axis (L) of the panel.

13. A panel according to any one of the claims from 1 to 11, comprising a plurality of supporting sheets (4) reciprocally fixed so as to form a wafer; each supporting sheet (4) being made of a compact, monolithic, solid wood body having a given thickness.

14. A panel (1) according to any one of the preceding claims, **characterized in that** it does not comprise any internal sheet made of composite resin-based material, such as a MDF and/or a HDF material.
